# EUROPÄISCHE PATENTSCHRIFT

(11) **EP 1 006 146 B1**
(45) Veröffentlichungstag und Bekanntmachung des Hinweises auf die Patenterteilung: **13.02.2002**
(21) Anmeldenummer: 99123224.0
(22) Anmeldetag: 25.11.1999
(51) Int. Cl.: C08K 5/5419, C08K 5/521, C08G 77/38, C08L 83/04

(54) **Unter Abspaltung von Alkoholen zu Elastomeren vernetzbare Organopolysiloxanmassen**
Organopolysiloxane compositions, curable into elastomers by elimination of alcohols
Compositions organopolysiloxanes réticulables en élastomères par élimination d'alcools

(30) Priorität: 02.12.1998 DE 19855619
(43) Veröffentlichungstag der Anmeldung: 07.06.2000
(73) Patentinhaber: Wacker-Chemie GmbH, 81737 München (DE)
(72) Erfinder: Finger, Christian, Dr., 84453 Mühldorf (DE); Dorsch, Norman, 84489 Burghausen (DE); Hechtl, Wolfgang, Dr., 84489 Burghausen (DE); Baumgartner, Christian, 84489 Burghausen (DE); Heinrich, Alfred, 5122 Ach (AT)
(74) Vertreter: Fritz, Helmut, Dr.

(56) Entgegenhaltungen:
- EP-A- 0 608 888
- WO-A-96/27636
- US-A- 4 755 578

## Beschreibung

Die Erfindung betrifft niedrigmodulige Vulkanisate ergebende RTV-1-Alkoxymassen, deren Herstellung und Verwendung als Fugendichtungsmassen für Verfugungen von Naturstein.

Der Begriff Organopolysiloxane soll im Rahmen der vorliegenden Erfindung dimere, oligomere und polymere Siloxane umfassen.

Weichmacherfreie RTV-1 Massen weisen für die Anwendung als dauerelastische Fugendichtungsmaterialien ein ungünstiges Spannungs-Dehnungsverhalten auf, da die Spannungswerte z.B. bei einer Dehnung um 100% ("Modul bei 100% Dehnung") zu hoch liegen. Ein hoher 100%-Modul (z.B. 0,6 N/mm²) ist gleichbedeutend mit einer starken Spannungserhöhung bei einer z.B.thermisch verursachten Fugenerweiterung, wobei die Gefahr des Haftungsversagens, also einer Ablösung des elastischen Dichungsmaterials vom jeweiligen Fugengrund ebenfalls stark erhöht wird. Die Praxis hat ergeben, daß bei einer derartigen Verfugung bevorzugt ein 100%-Modul von 0,2 - 0,4 N/mm² anzustreben ist.

Das Spannungsdehnungsverhalten eines Siliconkautschuk-Vulkanisats wird durch Art und Anteil des Füllstoffs und vor allem durch die Anzahl an Vernetzungsknoten pro Volumeneinheit bestimmt. Durch Erhöhung der Kettenlänge des hydroxylendständigen Diorganopolysiloxans läßt sich der Modul von RTV-1 Systemen erniedrigen. Die Verwendung möglichst langkettiger Polymere erfährt ihre Einschränkung dadurch, daß zur Erzielung einer weichpastösen, standfesten Konsistenz der füllstoff-haltigen Pasten die Viskosität des Organopolysiloxans nicht zu hoch werden soll, da dann kittig-steife Pasten resultieren, die nur schwierig zu verarbeiten sind.

Aus diesem Grund verwendet man zur Compoundierung häufig Abmischungen aus langkettigem Polymer und niedrigviskosem Siliconweichmacher. Diese Vorgehensweise ist übliche Praxis, um ein niedrigmoduliges Produkt herzustellen, wobei die Verwendung eines Weichmachers zur Viskositätserniedrigung aus Gründen der Verarbeitbarkeit zwingend notwendig ist. Weiterhin bewirkt die Verwendung eines trimethylsilyl-endständigen, kurzkettigen Organopolysiloxans als Weichmacher ebenfalls eine Reduzierung der Anzahl der Vernetzungsknoten pro Volumeneinheit und somit eine Erniedrigung des Moduls.

Der prinzipielle Nachteil eines Weichmachers besteht darin, daß er nicht an das Netzwerk des Vulkanisats angebunden ist. Er kann deshalb sowohl durch Kontakt mit einem Lösungsmittel aus dem Vulkanisat herausgelöst werden als auch selbst aus dem Vulkanisat heraus auf eine benachbarte Oberfläche wandern und diese belegen. Dieser Vorgang wird besonders bei Verfugungen von porösem Naturstein, wie Marmor, Granit, Altoquarzit auffällig deutlich, weil eine Hydrophobierung und Dunkelfärbung der Fugenrandzonen stattfindet, was natürlich unerwünscht ist. Für die Natursteinverfugung sollen deshalb prinzipiell keine weichmacherhaltigen Produkte verwendet werden.

Um einen Zusatz von Weichmacher in RTV-1-Alkoxymassen vermeiden zu können, wird in EP-A-763 556 ein kurzkettiges OH-endständiges Organopolysiloxan unter der Katalyse eines sauren Phosphorsäureesters wie z.B. Di-2-ethylhexyl-phosphat unter Bildung eines langkettigen OH-endständigen Organopolysiloxans kondensiert. Zum Abbruch der Kondensation wird z.B. nach 14 Minuten Kreide eingearbeitet, so daß offensichlich eine Neutralisation und damit Desaktivierung stattfindet. Anschließend erfolgt die Alkoxyendblockierung des langkettigen OH-endständigen Organopolysiloxans mit Methyltrimethoxysilan unter der Katalyse eines Titankatalysators. Auf diese Weise können niedrigmodulige Vulkanisate hergestellt werden. Dieses Verfahren benötigt jedoch zu viele Arbeitsschritte und führt zu unerwünscht steifen unvulkanisierten Massen.

In US-A-4,755,578 ist eine RTV-1-Alkoxymasse beschrieben, die eine Abmischung von alkyldialkoxysilyl- bzw. trialkoxysilylendständigen Polymeren mit dialkylmonoalkoxysilyl-endständigen Polymeren enthält. Die Dialkylmonoalkoxy-Endgruppen sind nicht vernetzungsaktiv. Die Herstellung aus hydroxylendständigem Diorganopolysiloxan und Dialkoxysilanen als auch Trialkoxysilanen erfolgt über längere Zeit bei höheren Temperaturen, wie 60 bis 80°C. Die Einarbeitung weiterer Bestandteile in die RTV-1-Masse muß danach getrennt erfolgen.

Der Erfindung liegt die Aufgabe zugrunde, gut verarbeitbare RTV-1-Alkoxymassen, welche ohne Weichmacherzusatz auf einen niedrigen Modul eingestellt werden können, auf einfache Weise bereitzustellen.

Gegenstand der Erfindung sind RTV-1-Alkoxymassen enthaltend das Produkt erhältlich durch die Umsetzung von
(A) HO-terminiertem Organopolysiloxan,
(B1)Alkoxysilan, das mindestens drei Alkoxygruppen aufweist und/oder dessen Teilhydrolysaten und
(B2)Alkoxysilan, das zwei Alkoxygruppen aufweist und/oder dessen Teilhydrolysaten, in Gegenwart von
(C) saurem Phosphorsäureester der allgemeinen Formel (I)

   (HO)ₐOP(-O-[(CR¹ ₂)_{b}-O]_{c}[(CR² ₂)_{d}]ₑ-L-M )₍₃₋ₐ₎ (I),

   in der
   - a: die Werte 1 oder 2,
   - R¹ und R²: einen Wasserstoff-, Methyl- oder Hydroxylrest,
   - b und d: die Werte 2 oder 3,
   - c: ganzzahlige Werte von 2 bis 15,
   - e: die Werte 0 oder 1
   - L: einen Rest aus der Gruppe -O-, -COO- und -OOC-,
   - R³ und R⁴: einen Wasserstoff- oder C₁-C₁₀-Alkylrest und
   - M: einen einwertigen, gegebenenfalls mit Hydroxyl-, Fluor-, Chlor-, Brom-, C₁-C₁₀-Alkoxyalkyl- oder Cyanogruppen substituierten C₁- bis C₂₀-Kohlenwasserstoffrest bedeuten,
   mit der Maßgabe, daß die Reste **R**^{**1**} und **R**^{**2**} an jedem Kohlenstoffatom nur einmal ein Hydroxylrest sein können.

Das Verfahren läuft bereits bei Raumtemperatur mit hoher Reaktionsgeschwindigkeit selektiv ab, so daß kurz nach Vermischen der Komponenten (A), (B1), (B2) und (C), beispielsweise nach 10 Minuten, das gebildete Alkoxyterminierte Organopolysiloxan, welches das Produkt der Reaktion der Komponenten (A) mit (B1) und (B2) unter Abspaltung von Alkanol darstellt; gegebenenfalls nach Zumischung weiterer Bestandteile als RTV-1-Alkoxymasse eingesetzt werden kann. Eine Energiezufuhr, etwa durch Erwärmen der Mischung, ist nicht notwendig. Auf eine Kontrolle, ob die Umsetzung vollständig abgelaufen ist, kann verzichtet werden.

Ein weiterer Vorteil bei diesem Verfahren ist darin zu sehen, daß dabei keine Nebenreaktionen ablaufen und beispielsweise an linearem HO-terminiertem Organopolysiloxan (A) die Bildung von T- und Q-Einheiten nicht beobachtet wurde.

Die sauren Phosphorsäureester (C) müssen nach der Umsetzung nicht unmittelbar anschließend desaktiviert werden.

Mit den Abmischungen von difunktionellen (B2) und tri- bzw. tetrafunktionellen Alkoxysilanen (B1) werden Monoalkoxy-, Dialkoxy- und Trialkoxy-silylendgruppen hergestellt, wobei die Monoalkoxysilylendgruppen nicht vernetzungsaktiv sind und deshalb keinen Beitrag leisten zur Erhöhung der Netzknoten-Konzentration. Dadurch wird eine Modulerniedrigung erzielt, ohne den Nachteil der Auswanderungsfähigkeit eines zugemischten Weichmachers in Kauf nehmen zu müssen.

Gegenstand der Erfindung ist auch ein Verfahren zur Herstellung der RTV-1-Alkoxymassen, bei dem
(A) HO-terminiertes Organopolysiloxan,
(B1)Alkoxysilan, das mindestens drei Alkoxygruppen aufweist und/oder dessen Teilhydrolysate und
(B2)Alkoxysilan, das zwei Alkoxygruppen aufweist und/oder dessen Teilhydrolysate, in Gegenwart von
(C) saurem Phosphorsäureester der allgemeinen Formel (I) umgesetzt werden.

Vorzugsweise beträgt das Verhältnis der Alkoxysilane (B1) : (B2) 99 : 1 bis 0,5 : 1, insbesondere 5 : 1 bis 1 : 1.

Vorzugsweise bedeutet c ganzzahlige Werte von 2 bis 10, insbesondere 2, 3, 4 oder 5.
Vorzugsweise bedeutet **L** einen Rest -O-.
Vorzugsweise bedeutet **M** einen gegebenenfalls mit C₁-C₁₀-Alkoxyalkylgruppen substituierten C₁- bis C₂₀-Kohlenwasserstoffrest, insbesondere einen unsubstituierten C₅-C₁₈-Kohlenwasserstoffrest.
Vorzugsweise bedeuten **R**^{**1**} und **R**^{**2**} einen Wasserstoffrest.
Vorzugsweise bedeuten **b** und **d** die Werte 2.

Die HO-terminierten Organopolysiloxane (A) sind lineare α,ω-Dihydroxypoly(diorganosiloxane) der allgemeinen Formel(II)

HO-[R₂SiO]ₘ-H (II),

worin
- **R**: einwertige, gegebenenfalls mit Fluor-, Chlor-, Brom-, C₁-C₄-Alkoxyalkyl- oder Cyanogruppen substituierte C₁-C₈-Kohlenwasserstoffreste bedeutet und
- **m**: solche Werte bedeutet, die einer Viskosität des HO-terminierten Organopolysiloxans (A) von 0,05 bis 1000 Pa.s entsprechen.

Beispiele für Kohlenwasserstoffreste **R** sind lineare und cylische gesättigte und ungesättigte Alkylreste, wie der Methylrest, Arylreste, wie der Phenylrest, Alkarylreste, wie Tolylreste und Aralkylreste, wie der Benzylrest.

Bevorzugt als Rest **R** sind unsubstituierte Kohlenwasserstoffreste mit 1 bis 6 Kohlenstoffatomen, wobei der Methylrest besonders bevorzugt ist.

Die Organopolysiloxane (A) besitzen vorzugsweise eine Viskosität von 100 bis 700000 mPa.s, insbesondere von 20000 bis 350000 mPa.s, jeweils gemessen bei 23° C.

Die Alkoxysilane (B1) weisen vorzugsweise die allgemeine Formel (III)

R⁵ _{µ}Si(OR⁶)_{4-µ} (III),

auf, worin
- **R**^{**5**} **und R**^{**6**}: einwertige, gegebenenfalls mit Fluor-, Chlor-, Brom-, C₁-C₄-Alkoxyalkyl- oder Cyanogruppen substituierte C₁-C₁₃-Kohlenwasserstoffreste und
- µ: die Werte 0 oder 1 bedeuten.

Die Teilhydrolysate von Alkoxysilan (B1) sind durch Hydrolyse und Kondensation von insbesondere 2 bis 4 Alkoxysilanen entstanden. Teilhydrolysate (B1) sind beispielsweise Hexamethoxydisiloxan und Hexaethoxydisiloxan.

Die Alkoxysilane (B2) weisen vorzugsweise die allgemeine Formel (IV)

R⁷ ₂Si(OR⁸)₂ (IV),

auf, worin **R**^{**7**} **und R**^{**8**} einwertige, gegebenenfalls mit Fluor-, Chlor-, Brom-, C₁-C₄-Alkoxyalkyl- oder Cyanogruppen substituierte C₁-C₁₃-Kohlenwasserstoffreste bedeuten.

Vorzugsweise bedeuten **R**^{**5**} und **R**^{**7**} jeweils unsubstituierte C₁-C₆-Kohlenwasserstoffreste, insbesondere Methyl-, Ethyl- und Propylreste.

Vorzugsweise bedeuten **R**^{**6**} und **R**^{**8**} jeweils unsubstituierte C₁-C₆-Kohlenwasserstoffreste, insbesondere Methyl-, Ethyl-, Vinyl- und Propylreste.

Die sauren Phosphorsäureester (C) der allgemeinen Formel (I) stabilisieren die aus dem Alkoxygruppen terminierten Organopolysiloxan hergestellten RTV-1-Alkoxymassen bei der Lagerung. Insbesondere bleiben die Hautbildungszeiten der RTV-1-Alkoxymassen nahezu konstant stabil und eine Verfärbung wird unterbunden.

In den allgemeinen Formeln (I) bis (IV) sind alle Reste **R, R**^{**1**} bis **R**^{**8**} sowie alle Indizes **a, b, c, d, e, m und** µ unabhängig voneinander gleich oder verschieden.

Die sauren Phosphorsäureester (C) werden bezogen auf 500 Gewichtsteile der HO-terminierten Organopolysiloxane (A) zu 0,1 bis 50 Gewichtsteilen, insbesondere zu 2 bis 20 Gewichtsteilen zugesetzt.

Die Zugabe der Alkoxysilane (B1) und (B2) zu den HO-terminierten Organopolysiloxanen (A) erfolgt bevorzugt in einem Überschuß, was die stöchiometrischen Verhältnisse betrifft. Um die Reaktion der HO-terminierten Organopolysiloxane (A) mit Alkoxysilanen (B1) und (B2) möglichst vollständig ablaufen zu lassen, können bevorzugt 10 bis 60 Gewichtsteile, insbesondere zu 20 bis 50 Gewichtsteile der Alkoxysilane (B1) und (B2) pro 500 Gewichtsteile der HO-terminierten Organopolysiloxane (A) eingesetzt werden. Der während der Reaktion nicht abreagierte Überschuß an Alkoxysilanen (B1) und (B2) ist in dem mit Organyloxygruppen terminiertem Organopolysiloxan und den RTV-1-Alkoxymassen nicht von Nachteil und kann deshalb im Reaktionsprodukt verbleiben. Ein Überschuß an Alkoxysilanen (B1) wirkt als Vernetzerkomponente in den RTV-1-Alkoxymassen.

Die Umsetzung erfolgt vorzugsweise bei Temperaturen von +20 bis +50° C, insbesondere bei Raumtemperatur. Die Reaktionszeit beträgt abhängig von den eingesetzten Alkoxysilanen (B1) und (B2) 1 bis 60 Minuten.

Die Reaktionsgeschwindigkeit bei der Umsetzung richtet sich zum einen nach der Reaktivität der verwendeten Alkoxysilane (B1) und (B2), zum anderen nach dem sauren Phosphorsäureester (C).

Die besonders bevorzugte Umsetzungsdauer beträgt bei Raumtemperatur 3-20 min, was gerade für die Herstellung von RTV-1 Massen im Eintopfverfahren von wesentlichem Vorteil ist.

Zusätzlich zu den vorgenannten Komponenten können die RTV-1-Alkoxymassen weitere, an sich bekannte Komponenten enthalten.

Weitere Stoffe, die vorzugsweise bei der Bereitung der RTV-1-Alkoxymassen mitverwendet werden können, sind Bis(trialkoxysilyl)C₁-C₁₂-alkane, bei denen die Alkoxyreste die Bedeutungen von O**R**^{**6**} aufweisen, beispielsweise Bis(triethoxysilyl)ethan.

Desgleichen können bei der Bereitung der RTV-1-Alkoxymassen verwendet werden Kondensationskatalysatoren, verstärkende Füllstoffe, nichtverstärkende Füllstoffe, Pigmente, lösliche Farbstoffe, Riechstoffe, Weichmacher, wie bei Raumtemperatur flüssige, durch Trimethylsiloxygruppen endblockierte Dimethylpolysiloxane oder Phosphorsäureester, Fungicide, harzartige Organopolysiloxane, einschließlich solcher aus (CH₃)₃SiO_{1/2-} und SiO_{4/2-} Einheiten, rein-organische Harze, wie Homo- oder Mischpolymerisate des Acrylnitrils, Styrols, Vinylchlorids oder Propylens, wobei solche rein-organischen Harze, insbesondere Mischpolymerisate aus Styrol und n-Butylacrylat, bereits in Gegenwart von in den endständigen Einheiten je eine Si-gebundene Hydroxylgruppe aufweisendem Diorganopolysiloxan durch Polymerisation der genannten Monomeren mittels freier Radikale erzeugt worden sein können, Korrosionsinhibitoren, Polyglykole, die verestert und/oder verethert sein können, Oxydationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit SiC-gebundenen Mercaptoalkylresten, sowie zellenerzeugende Mittel, z.B. Azodicarbonamid. Desgleichen können Haftvermittler, vorzugsweise amino-alkylfunktionelle Silane wie γ-Aminopropyltriethoxysilan, zugegeben werden.

Kondensationskatalysatoren werden vorzugsweise eingesetzt. Es können die RTV-1-Alkoxymassen erfindungsgemäß beliebige Kondensationskatalysatoren enthalten, die auch bisher in unter Ausschluß von Wasser lagerfähigen, bei Zutritt von Wasser bei Raumtemperatur zu Elastomeren vernetzenden Massen hergestellt worden sind, vorliegen konnten.

Beispiele für solche Kondensationskatalysatoren sind organische Verbindungen von Zinn, Zink, Zirkonium, Titan und Aluminium. Bevorzugt unter diesen Kondensationskatalysatoren sind Butyltitanate und organische Zinnverbindungen, wie Di-n-butylzinndiacetat, Di-n-butylzinndilaurat und Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesen Umsetzungsprodukten alle Valenzen der Zinnatome durch Sauerstoffatome der Gruppierung ≡SiOSn≡ bzw. durch SnC-gebundene, einwertige organische Reste abgesättigt sind.

Vorzugsweise enthalten die RTV-1-Alkoxymassen Füllstoffe. Beispiele für Füllstoffe sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g wie pyrogen hergestellte Kieselsäure, gefällte Kieselsäure, Ruß wie Furnace- und Acetylenruß und Silicium-Aluminium-Mischoxide großer BET-Oberfläche; faserförmige Füllstoffe wie Asbest sowie Kunststoffasern.

Die genannten Füllstoffe können hydrophobiert sein, beispielsweise durch die Behandlung mit Organosilanen bzw. siloxanen oder mit Stearinsäure oder durch Veretherung von Hydroxylgruppen zu Alkoxygruppen. Es kann eine Art von Füllstoff, es kann auch ein Gemisch von mindestens zwei Füllstoffen eingesetzt werden.

Bei alleiniger Verwendung von verstärkender Kieselsäure als Füllstoff können transparente RTV-1-Alkoxymassen hergestellt werden.

Für die Vernetzung der RTV-1-Alkoxymassen reicht der übliche Wassergehalt der Luft aus. Die Vernetzung kann, falls erwünscht, auch bei höheren oder niedrigeren Temperaturen als Raumtemperatur, z.B. bei -5° bis 10° C oder bei 30° bis 50° C durchgeführt werden.

Vorzugsweise beträgt der Spannungswert bei 100% Dehnung (100%-Modul), nach DIN 18540 der ausgehärteten RTV-1-Alkoxymassen bei höchstens 0,45, insbesondere höchstens 4.

Die erfindungsgemäßen RTV-1-Alkoxymassen eignen sich somit ausgezeichnet beispielsweise als Abdichtungsmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Vitrinen, sowie z.B. zur Herstellung von Schutzüberzügen, oder von gummielastischen Formkörpern sowie für die Isolierung von elektrischen oder elektronischen Vorrichtungen. Insbesondere geeignet sind die erfindungsgemäßen RTV-1-Alkoxymassen als Fugendichtungsmassen für Verfugungen von Naturstein.

In den nachstehend beschriebenen Beispielen beziehen sich alle Angaben von Teilen mit Prozentsätzen, falls nicht anders angegeben, auf das Gewicht. Des Weiteren beziehen sich alle Viskositätsangaben auf eine Temperatur von 25° C. Sofern nicht anders angegeben, werden die nachstehenden Beispiele bei einem Druck der umgebenden Atmosphäre, also bei etwa 1000 hPa, und Raumtemperatur, also bei etwa 20° C, bzw. bei einer Temperatur, die sich beim Zusammengeben der Reaktanden bei Raumtemperatur ohne zusätzliche Heizung oder Kühlung einstellt, durchgeführt.

### Beispiele

Nachfolgend sind die Herstellungsbeispiele beschrieben. Hierbei wird die Alkoxyendblockierung entweder mit Abmischungen aus Trialkoxy- und Dialkoxysilanen (B1) und (B2) oder zu Vergleichszwecken ausschließlich mit Trialkoxysilanen (B1) (Beispiele 4 und 5) durchgeführt. Ebenfalls zu Vergleichszwecken wird in einigen Beispielen ein Siliconweichmacher (Beispiele 6 und 7) zugemischt.
Es werden folgende Eigenschaftswerte angegeben:
1) Hautbildungszeit, Ausgangswert.
2) Hautbildungszeit, nach 28 Tagen Tubenlagerung bei 50°C.
3) Spannungswert bei 100% Dehnung (100%-Modul), nach DIN 18540. Die Prüfkörper werden folgendermaßen hergestellt:
   Zwischen 2 U-förmigen Aluminium-Teilen (Wandstärke: 2 mm; Länge: 70 mm; Breite: 12 mm; Höhe: 12 mm) wird unter Verwendung von 2 äußeren Abstands- und Fugenbegrenzungs-Elementen (Länge: 10 mm; Breite: 12 mm; Höhe: 12 mm) eine Fugenfüllung mit den Abmessungen 50 mm x 12 mm x 12 mm hergestellt. Nach einer Lagerung von 4 Wochen bei 23 °C/ 50% RLF wird der Spannungswert bei einer Dehnung um 100% gemessen.
4) Bestimmung der Weichmacher-Auswanderung.

Zwischen 2 Teilen aus Altoquarzit mit den Abmessungen für die Länge von 80 mm, für die Breite von ebenfalls 80 mm und für die Höhe von 8 mm wird eine Fugenfüllung mit den Abmessungen 80 mm x 8 mm x10 mm (Fugenbreite) hergestellt. Nach einer Lagerung von 2 Wochen bei 23°C / 50% RLF wird der Prüfkörper in einer Einspannvorrichtung senkrecht zur Verfugung gestaucht, so daß die Fugenbreite von ursprünglich 10 mm auf 7,5 mm verringert wird. Unter dieser Spannung wird eine Lagerung bei 50 °C durchgeführt. Nach einer Lagerzeit von 6 Wochen wird überprüft, ob im Grenzbereich der Verfugung eine Dunkelfärbung der Steinoberfläche zu erkennen ist.

### Beispiel 1 (erfindungsgemäß) :

In einem Planetenmischer mit Vakuumausrüstung werden unter Wasserausschluß 850 g eines Dimethylpolysiloxans, das in den endständigen Einheiten je eine Hydroxylgruppe aufweist mit einer Viskosität von 20000 mPa.s bei 23 °C mit 12 g Gemisch an alkoxylierten Phosphorsäureestern der Formeln

(OH) ₁PO [(OCH₂CH₂)₂₋₃-O- (CH₂) ₇₋₉ -CH₃]₂

und

(OH) ₂PO [ (OCH₂CH₂)₂₋₃-O- (CH₂) ₇₋₉ -CH₃]₁

vermischt.

Unmittelbar darauf fügt man 20 g Methyltrimethoxysilan, 10 g Vinyltrimethoxysilan und 10 g Dimethyldimethoxysilan zu und homogenisiert im Vakuum 10 Minuten. Danach setzt man unter Beibehaltung der für RTV-1 Massen üblichen Mischtechnik in der angegebenen Reihenfolge zu:
85 g pyrogene, hydrophile Kieselsäure mit einer Oberfläche von 150 m² / g nach BET
18 g aminofunktionelles Siloxan: Äquilibrierungsprodukt aus Aminopropyltriethoxysilan und einem Kondensat/Hydrolysat aus Methyltriethoxysilan mit einer Aminzahl von 2,2
4 g 3-(2-Aminoethylamino)propyltriethoxysilan
4 g eines Umsetzungsprodukts, das durch 6-stündiges Erhitzen eines Gemisches aus 4 Teilen Tetraethylsilikat und 2,2 Teilen Di-n-butylzinndiacetat auf 120°C beim Druck der umgebenden Atmosphäre unter Rühren und gleichzeitigem Abdestillieren des bei der Reaktion entstehenden Essigsäureethylesters hergestellt wurde.

Nach Homogenisierung im Vakuum wird der Compound in feuchtigkeitsdichte Gebinde abgefüllt.

Die Hautbildungszeit der Masse während der Vulkanisation hat einen Ausgangswert von 20 Minuten; dieser Wert bleibt auch nach 28 d/50°C unverändert.
Die Messung des Moduls bei 100% Dehnung der beispielsgemäßen Masse in einer nach Punkt 3) angefertigten und ausgehärteten Verklebung ergibt einen Wert von 0.50.
Eine nach Punkt 4) hergestellte Verfugung zwischen Altoquarzit-Platten weist nach 6 Wochen bei 50°C keinerlei Randzonenverschmutzung auf.

### Beispiel 2 (erfindungsgemäß) :

Es wird analog zu Beispiel 1 vorgegangen.

850 g α,ω-Dihydroxypolydimethylsiloxan von Beispiel 1 werden mit 15 g Gemisch an alkoxylierten Phosphorsäureestern der Formeln

(OH) ₁PO [(OCH₂CH₂)₃₋₄-O- (CH₂) ₁₁₋₁₄ -CH₃]₂

und

(OH) ₂PO [(OCH₂CH₂)₃₋₄-O- (CH₂) ₁₁₋₁₄ -CH₃]₁

vermischt.

Dazu werden folgende Ingredienzien in der angegebenen Reihenfolge zugemischt:
22 g Methyltrimethoxysilan
11 g Vinyltrimethoxysilan
17 g Dimethyldimethoxysilan
18 g aminofunktionelles Siloxan: Äquilibrierungsprodukt aus Aminopropyltriethoxysilan und einem Kondensat/Hydrolysat aus Methyltriethoxysilan mit einer Aminzahl von 2,2
4 g 3-(2-Aminoethylamino)propyltriethoxysilan
85 g pyrogene, hydrophile Kieselsäure mit einer Oberfläche von 150 m² / g nach BET und
4 g des Umsetzungsprodukts aus Tetraethylsilikat und Di-n-butylzinndiacetat von Beispiel 1.

Die Hautbildungszeit der Masse während der Vulkanisation hat einen Ausgangswert von 30 Minuten; dieser Wert bleibt auch nach 28 d/50°C unverändert.
Die Messung des Moduls bei 100% Dehnung der Masse in einer nach Punkt 3) angefertigten und ausgehärteten Verklebung ergibt einen Wert von 0.35.
Eine nach Punkt 4) hergestellte Verfugung zwischen Altoquarzit-Platten weist nach 6 Wochen bei 50°C keinerlei Randzonenverschmutzung auf.

### Beispiel 3:

Es wird analog zu Beispiel 1 vorgegangen. Zu 850 g α,ω-Dihydroxypolydimethylsiloxan von Beispiel 1 werden folgende Ingredienzien in der angegebenen Reihenfolge zugemischt:
15 g alkoxylierter Phosphorsäureester von Beispiel 2
Unmittelbar darauf fügt man 17 g Methyltrimethoxysilan, 8 g Vinyltrimethoxysilan und 25 g Dimethyldimethoxysilan zu und homogenisiert im Vakuum 10 Minuten. Danach setzt man unter Beibehaltung der für RTV-1 Massen üblichen Mischtechnik in der angegebenen Reihenfolge zu:
18 g aminofunktionelles Siloxan: Äquilibrierungsprodukt aus Aminopropyltriethoxysilan und einem Kondensat/Hydrolysat aus Methyltriethoxysilan mit einer Aminzahl von 2,2
4 g 3-(2-Aminoethylamino)propyltriethoxysilan
85 g pyrogene, hydrophile Kieselsäure mit einer Oberfläche von 150 m² / g nach BET und
4 g des Umsetzungsprodukts aus Tetraethylsilikat und Di-n-butylzinndiacetat von Beispiel 1.

Die Hautbildungszeit der Masse während der Vulkanisation hat einen Ausgangswert von 35 Minuten; dieser Wert bleibt auch nach 28 d/50°C unverändert.
Die Messung des Moduls bei 100% Dehnung der Masse in einer nach nach vorstehend Punkt 3) angefertigten und ausgehärteten Verklebung ergibt einen Wert von 0.25.
Eine nach Punkt 4) hergestellte Verfugung zwischen Altoquarzit-Platten weist nach 6 Wochen bei 50°C eine geringe Randzonenverschmutzung auf.

### Beispiel 4 (Vergleichsbeispiel ohne Modul-erniedrigenden Zusatz) :

Es wird analog zu Beispiel 1 vorgegangen. Zu 850 g α,ω-Dihydroxypolydimethylsiloxan von Beispiel 1 werden folgende Ingredienzien in der angegebenen Reihenfolge zugemischt:
15 g alkoxylierter Phosphorsäureester von Beispiel 2
33 g Methyltrimethoxysilan
17 g Vinyltrimethoxysilan
18 g aminofunktionelles Siloxan: Äquilibrierungsprodukt aus Aminopropyltriethoxysilan und einem Kondensat/Hydrolysat aus Methyltriethoxysilan mit einer Aminzahl von 2,2
4 g 3-(2-Aminoethylamino)propyltriethoxysilan
85 g pyrogene , hydrophile Kieselsäure mit einer Oberfläche von 150 m² / g nach BET und
4 g des Umsetzungsprodukts aus Tetraethylsilikat und Di-n-butylzinndiacetat von Beispiel 1.

Die Hautbildungszeit der Masse während der Vulkanisation hat einen Ausgangswert von 35 Minuten; dieser Wert bleibt auch nach 28 d/50°C unverändert.
Die Messung des Moduls bei 100% Dehnung der Masse in einer nach Punkt 3) angefertigten und ausgehärteten Verklebung läßt sich nicht ermitteln, da bei einer Dehnung um 73% Kohäsionsriß in der Masse erfolgt. Der Modul bei 50% Dehnung liegt bei 0.56; die Masse ist extrem hochmodulig.
Eine nach Punkt 4) hergestellte Verfugung zwischen Altoquarzit-Platten weist nach 6 Wochen bei 50°C keinerlei Randzonenverschmutzung auf.

### Beispiel 5 (Vergleichsbeispiel ohne Modul-erniedrigenden Zusatz mit niedrigerem Vernetzeranteil 1 und anderer Compoundier-Reihenfolge als Beispiel 4):

Es wird analog zu Beispiel 1 vorgegangen. Zu 850 g α,ω-Dihydroxypolydimethylsiloxan von Beispiel 1 werden folgende Ingredienzien in der angegebenen Reihenfolge zugemischt:
12 g alkoxylierter Phosphorsäureester von Beispiel 1
20 g Methyltrimethoxysilan
10 g Vinyltrimethoxysilan
85 g pyrogene, hydrophile Kieselsäure mit einer Oberfläche von 150 m² / g nach BET
18 g aminofunktionelles Siloxan: Äquilibrierungsprodukt aus Aminopropyltriethoxysilan und einem Kondensat/Hydrolysat aus Methyltriethoxysilan mit einer Aminzahl von 2,2
4 g 3-(2-Aminoethylamino)propyltriethoxysilan
4 g des Umsetzungsprodukts aus Tetraethylsilikat und Di-n-butylzinndiacetat von Beispiel 1.

Die Hautbildungszeit der Masse während der Vulkanisation hat einen Ausgangswert von 20 Minuten; dieser Wert bleibt auch nach 28 d/50°C unverändert.
Die Messung des Moduls bei 100% Dehnung der Masse in einer nach Punkt 3) angefertigten und ausgehärteten Verklebung ergibt einen Wert von 0.60.
Eine nach Punkt 4) hergestellte Verfugung zwischen Altoquarzit-Platten weist nach 6 Wochen bei 50°C keinerlei Randzonenverschmutzung auf.

### Beispiel 6 (Vergleichsbeispiel mit externem Weichmacher) :

Es wird analog zu Beispiel 1 vorgegangen. Es werden jedoch zunächst 607 g α,ω-Dihydroxypolydimethylsiloxan von Beispiel 1 und 243 g eines Polydimethylsiloxans mit Trimethylsiloxygruppen in den endständigen Einheiten einer Viskosität von 100 mm²/s (23°C) vermischt. Anschließend werden folgende Ingredienzien in der angegebenen Reihenfolge zugemischt:
8 g alkoxylierter Phosphorsäureester von Beispiel 2
20 g Methyltrimethoxysilan
10 g Vinyltrimethoxysilan
18 g aminofunktionelles Siloxan: Äquilibrierungsprodukt aus Aminopropyltriethoxysilan und einem Kondensat/Hydrolysat aus Methyltriethoxysilan mit einer Aminzahl von 2,2
4 g 3-(2-Aminoethylamino)propyltriethoxysilan
85 g pyrogene, hydrophile Kieselsäure mit einer Oberfläche von 150 m² / g nach BET und
4 g des Umsetzungsprodukts aus Tetraethylsilikat und Di-n-butylzinndiacetat von Beispiel 1.

Die Hautbildungszeit der Masse während der Vulkanisation hat einen Ausgangswert von 20 Minuten; dieser Wert bleibt auch nach 28 d/50°C unverändert.
Die Messung des Moduls bei 100% Dehnung der Masse in einer nach Punkt 3) angefertigten und ausgehärteten Verklebung ergibt einen Wert von 0.38. Eine nach Punkt 4) hergestellte Verfugung zwischen Altoquarzit-Platten weist nach 6 Wochen bei 50°C eine starke Randzonenverschmutzung auf.

### Beispiel 7 (Vergleichsbeispiel mit externem Weichmacher) :

Es wird analog zu Beispiel 1 vorgegangen. Es werden jedoch zunächst 535 g α,ω-Dihydroxypolydimethylsiloxan von Beispiel 1 und 315 g eines Polydimethylsiloxans mit Trimethylsiloxygruppen in den endständigen Einheiten einer Viskosität von 100 mm²/s (23°C) vermischt. Anschließend werden folgende Ingredienzien in der angegebenen Reihenfoge zugemischt:
8 g alkoxylierter Phosphorsäureester von Beispiel 2
20 g Methyltrimethoxysilan
10 g Vinyltrimethoxysilan
18 g aminofunktionelles Siloxan: Äquilibrierungsprodukt aus Aminopropyltriethoxysilan und einem Kondensat/Hydrolysat aus Methyltriethoxysilan mit einer Aminzahl von 2,2
4 g 3-(2-Aminoethylamino)propyltriethoxysilan
85 g pyrogene, hydrophile Kieselsäure mit einer Oberfläche von 150 m² / g nach BET und
4 g des Umsetzungsprodukts aus Tetraethylsilikat und Di-n-butylzinndiacetat von Beispiel 1.

Die Hautbildungszeit der Masse während der Vulkanisation hat einen Ausgangswert von 20 Minuten; dieser Wert bleibt auch nach 28 d/50°C unverändert.
Die Messung des Moduls bei 100% Dehnung der Masse in einer nach Punkt 3) angefertigten und ausgehärteten Verklebung ergibt einen Wert von 0.36.
Eine nach Punkt 4) hergestellte Verfugung zwischen Altoquarzit-Platten weist nach 6 Wochen bei 50°C eine sehr starke Randzonenverschmutzung auf, die ausgeprägter ist als in Beispiel 6.

## Patentansprüche

1. RTV-1-Alkoxymassen enthaltend das Produkt erhältlich durch die Umsetzung von
(A) HO-terminiertem Organopolysiloxan, das ein lineares α,ω-Dihydroxypoly(diorgano)siloxan der allgemeinen Formel (II)
HO-[R₂SiO]ₘ-H (II),
ist, worin
**R** einwertige, gegebenenfalls mit Fluor-, Chlor-, Brom-, C₁-C₄-Alkoxyalkyl- oder Cyanogruppen substituierte C₁-C₈-Kohlenwasserstoffreste bedeutet und
**m** solche Werte bedeutet, die einer Viskosität des HO-terminierten Organopolysiloxans (A) von 0,05 bis 1000 Pa.s entsprechen,
(B1) Alkoxysilan, das mindestens drei Alkoxygruppen aufweist und/oder dessen Teilhydrolysaten und
(B2) Alkoxysilan, das zwei Alkoxygruppen aufweist und/oder dessen Teilhydrolysaten, in Gegenwart von
(C) saurem Phosphorsäureester der allgemeinen Formel (I)
(HO)ₐOP(-O-[(CR¹₂)_{b}-O]_{c}[(CR²₂)_{d}]ₑ-L-M )₍₃₋ₐ₎ (I),
in der
**a** die Werte 1 oder 2,
**R**^{**1**} **und R**^{**2**} einen Wasserstoff-, Methyl- oder Hydroxylrest,
**b und d** die Werte 2 oder 3,
**c** ganzzahlige Werte von 2 bis 15,
**e** die Werte 0 oder 1
**L** einen Rest aus der Gruppe -O-, -COO- und -OOC-,
**R**^{**3**} **und R**^{**4**} einen Wasserstoff- oder C₁-C₁₀-Alkylrest und
**M** einen einwertigen, gegebenenfalls mit Hydroxyl-, Fluor-, Chlor-, Brom-, C₁-C₁₀-Alkoxyalkyl- oder Cyanogruppen substituierten C₁- bis C₂₀-Kohlenwasserstoffrest bedeuten, mit der Maßgabe, daß die Reste **R**^{**1**} und **R**^{**2**} an jedem Kohlenstoffatom nur einmal ein Hydroxylrest sein können.

2. RTV-1-Massen nach Anspruch 1, bei denen die Alkoxysilane (B1) die allgemeine Formel (III)
R⁵ _{µ}Si(OR⁶)_{4-µ} (III),
aufweisen, worin
**R**^{**5**} **und R**^{**6**} einwertige, gegebenenfalls mit Fluor-, Chlor-, Brom-, C₁-C₄-Alkoxyalkyl- oder Cyanogruppen substituierte C₁-C₁₃-Kohlenwasserstoffreste und
µ die Werte 0 oder 1 bedeuten.

3. RTV-1-Massen nach Anspruch 1 und 2, bei denen die Alkoxysilane (B2) vorzugsweise die allgemeine Formel (IV)
R⁷ ₂Si(OR⁸)₂ (IV),
aufweisen, worin
**R**^{**7**} **und R**^{**8**} einwertige, gegebenenfalls mit Fluor-, Chlor-, Brom-, C₁-C₄-Alkoxyalkyl- oder Cyanogruppen substituierte C₁-C₁₃-Kohlenwasserstoffreste bedeuten.

4. Verfahren zur Herstellung der RTV-1-Alkoxymassen gemäß Anspruch 1 bis 3, bei dem
(A) HO-terminiertes Organopolysiloxan der allgemeinen Formel (II)
(B1) Alkoxysilan, das mindestens drei Alkoxygruppen aufweist und/oder dessen Teilhydrolysate und
(B2) Alkoxysilan, das zwei Alkoxygruppen aufweist und/oder dessen Teilhydrolysate, in Gegenwart von
(C) saurem Phosphorsäureester der allgemeinen Formel (I) umgesetzt werden.

5. Verwendung der RTV-1-Alkoxymassen gemäß Anspruch 1 bis 3 als Fugendichtungsmassen für Verfugungen von Naturstein.

## Claims

1. Alkoxy RTV1 compositions comprising the product obtainable via the reaction of
(A) HO-terminated organopolysiloxane which is a linear α,ω-dihydroxypoly(diorgano)siloxane of the general formula (II)
HO-[R₂SiO]ₘ-H (II),
where
R is a monovalent, unsubstituted or fluorine-, chlorine-, bromine-, C₁-C₄-alkoxyalkyl- or cyano-substituted C₁-C₈-hydrocarbon radical, and
m has a value which corresponds to a viscosity of the HO-terminated organopolysiloxane (A) of from 0.05 to 1000 Pa.s,
(B1) alkoxysilane which has at least three alkoxy groups and/or its partial hydrolysates, and
(B2) alkoxysilane which has two alkoxy groups and/or its partial hydrolysates, in the presence of
(C) acid phosphoric ester of the general formula (I)
(HO)ₐOP(-O-[(CR¹ ₂)_{b}-O]_{c}[(CR² ₂)_{d}]ₑ-L-M)₍₃₋ₐ₎ (I),
where
a is 1 or 2,
R¹ and R² are a hydrogen radical, methyl radical or hydroxyl radical,
b and d are 2 or 3,
c is an integer from 2 to 15,
e is 0 or 1
L is a radical selected from the class consisting of -O-, -COO- and -OOC-,
R³ and R⁴ are a hydrogen radical or C₁-C₁₀-alkyl radical, and
M is a monovalent, unsubstituted or hydroxyl-, fluorine-, chlorine-, bromine-, C₁-C₁₀-alkoxyalkyl-or cyano-substituted C₁-C₂₀-hydrocarbon radical, with the proviso that on any carbon atom only one radical R¹ and R² may be a hydroxyl radical.

2. RTV1 compositions according to Claim 1, in which the alkoxysilanes (B1) have the general formula (III)
R⁵ _{µ}Si(OR⁶)_{4-µ} (III),
where
R⁵ and R⁶ are monovalent, unsubstituted or fluorine-, chlorine-, bromine-, C₁-C₄-alkoxyalkyl- or cyano-substituted C₁-C₁₃-hydrocarbon radicals, and
µ is 0 or 1.

3. RTV1 compositions according to Claim 1 or 2, in which the alkoxysilanes (B2) preferably have the general formula (IV)
R⁷ ₂Si(OR⁸)₂ (IV),
where
R⁷ and R⁸ are monovalent, unsubstituted or fluorine-, chlorine-, bromine-, C₁-C₄-alkoxyalkyl- or cyano-substituted C₁-C₁₃-hydrocarbon radicals.

4. Process for preparing the alkoxy RTV1 compositions according to Claims 1 to 3, in which
(A) HO-terminated organopolysiloxane of the general formula (II),
(B1) alkoxysilane which has at least three alkoxy groups and/or its partial hydrolysates, and
(B2) alkoxysilane which has two alkoxy groups and/or its partial hydrolysates are reacted in the presence of
(C) acid phosphoric ester of the general formula (I).

5. Use of the alkoxy RTV1 compositions according to Claims 1 to 3 as as sealing compound for filling joints in natural stone.

## Revendications

1. Masses RTV-1-alcoxy contenant le produit pouvant être obtenu par la transformation
(A) d'organopolysiloxane terminé par OH, qui est un α,ω-dihydroxypoly(diorgano)siloxane linéaire de formule générale (II)
HO-[R₂SiO]ₘ-H (II)
dans laquelle
R signifie des radicaux hydrocarbonés en C₁ à C₈ monovalents, le cas échéant substitués par des groupements fluor, chlore, brome, alcoxyalkyle en C₁ à C₄ ou cyano et
m signifie des valeurs qui correspondent à une viscosité de l'organopolysiloxane (A) terminé par OH de 0,05 à 1000 Pa.s,
(B1) d'alcoxysilane, qui présente au moins trois groupements alcoxy et/ou ses hydrolysats partiels et
(B2) d'alcoxysilane qui présente deux groupements alcoxy et/ou ses hydrolysats partiels, en présence
(C) d'ester acide de l'acide phosphorique de formule générale (I)
(HO)ₐOP(-O-[(CR¹ ₂)_{b}-O]_{c}[(CR² ₂)_{d}]ₑ-L-M) ₍₃₋ₐ₎ (I)
dans laquelle
a signifie les valeurs 1 ou 2,
R¹ et R² signifient un radical hydrogène, méthyle ou hydroxyle,
b et d signifient les valeurs 2 ou 3,
c signifie des valeurs entières de 2 à 15,
e signifie les valeurs 0 ou 1,
L signifie un radical du groupe -O-, -COO- et - OOC-,
R³ et R⁴ signifient un radical hydrogène ou alkyle en C₁ à C₁₀ et
M signifie un radical hydrocarboné en C₁ à C₂₀ monovalent, le cas échéant substitué par des groupements hydroxyle, fluor, chlore, brome, alcoxyalkyle en C₁ à C₁₀ ou cyano,
sous réserve que les radicaux R¹ et R² sur chaque atome de carbone ne peuvent être qu'une fois un radical hydroxyle.

2. Masses RTV-1 selon la revendication 1, dans lesquelles les alcoxysilanes (B1) présentent la formule générale (III)
R⁵ _{µ}Si(OR⁶)_{4-µ} (III)
dans laquelle
R⁵ et R⁶ signifient des radicaux hydrocarbonés en C₁ à C₁₃ monovalents, le cas échéant substitués par des groupements fluor, chlore, brome, alcoxyalkyle en C₁ à C₄ ou cyano, et
µ signifie les valeurs 0 ou 1.

3. Masses RTV-1 selon les revendications 1 et 2, dans lesquelles les alcoxysilanes (B2) présentent de préférence la formule générale (IV)
R⁷ ₂Si(OR⁸)₂ (IV)
dans laquelle R⁷ et R⁸ signifient des radicaux hydrocarbonés en C₁ à C₁₃ monovalents, le cas échéant substitués par des groupements fluor, chlore, brome, (alcoxy en C₁ à C₄)alkyle ou cyano.

4. Procédé pour la préparation des masses RTV-1-alcoxy selon les revendications 1 à 3, dans lequel on transforme
(A) de l'organopolysiloxane terminé par OH de formule générale (II)
(B1) de l'alcoxysilane, qui présente au moins trois groupements alcoxy et/ou ses hydrolysats partiels et
(B2) de l'alcoxysilane qui présente deux groupements alcoxy et/ou ses hydrolysats partiels, en présence
(C) d'ester acide de l'acide phosphorique de formule générale (I).

5. Utilisation des masses RTV-1-alcoxy selon les revendications 1 à 3 comme masses d'étanchéité de joints pour le jointoiement de pierre naturelle.
